**Europäisches Patentamt**

**European Patent Office**

**Office européen des brevets**

(11) Veröffentlichungsnummer: **0 416 693 A2**

# (12) EUROPÄISCHE PATENTANMELDUNG

(21) Anmeldenummer: **90202321.7**

(22) Anmeldetag: **31.08.90**

(51) Int. Cl.5: **H04N 7/13**

(30) Priorität: **04.09.89 DE 3929291**

(43) Veröffentlichungstag der Anmeldung:
**13.03.91 Patentblatt 91/11**

(84) Benannte Vertragsstaaten:
**BE DE FR GB IT SE**

(71) Anmelder: **Philips Patentverwaltung GmbH**
**Wendenstrasse 35 Postfach 10 51 49**
**W-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **BE FR GB IT SE**

(72) Erfinder: **Wenger, Jean, Dipl.-Ing.**
**Pharrhöhe 17**
**W-8507 Oberasbach(DE)**
Erfinder: **Witzany, Jürgen, Dipl.-Ing. FH**
**Stresemannplatz 1**
**W-8500 Nürnberg 20(DE)**
Erfinder: **Gendsior, Manfred, Dipl.-Ing. FH**
**Bauderstrasse 22**
**W-8500 Nürnberg 40(DE)**
Erfinder: **Lange, Heinz, Dipl.-Ing.**
**Bienenweg 13**
**W-8501 Heroldsberg(DE)**

(74) Vertreter: **Peuckert, Hermann, Dipl.-Ing. et al**
**Philips Patentverwaltung GmbH**
**Wendenstrasse 35 Postfach 10 51 49**
**W-2000 Hamburg 1(DE)**

(54) **Einrichtung zum Umsetzen und Rückumsetzen eines Videosignals.**

(57) Die Erfindung betrifft eine Einrichtung zum Umsetzen eines Videosignals, das aus duo-binär-codierten Signalanteilen und analogen Signalanteilen zusammengesetzt ist (z.B. D-MAC, D2-MAC oder HD-MAC), in einen Video-Datenstrom. Ein solcher Video-Datenstrom soll über ein Übertragungssystem der vierten PCM-Hierarchiestufe mit 140 Mbit/s übertragen werden.

Eine solche Übertragung wird dadurch ermöglicht, daß aus dem Videosignal gebildete Abtastwerte in einem Video-Umsetzer einem duo-binären Decoder und einem HDPCM-Coder zugeführt sind, das binäre Ausgangssignal des duo-binären Decoders und die HDPCM-Codeworte zu einem Video-Datenstrom zusammengefaßt werden und daß in einem Video-Rückumsetzer der Datenstrom mittels eines duo-binären Coders und eines HPDCM-Decoders wieder in ein Videosignal zurückgewandelt werden.

FIG. 4

EP 0 416 693 A2

## EINRICHTUNG ZUM UMSETZEN UND RÜCKUMSETZEN EINES VIDEOSIGNALS

Die Erfindung betrifft eine Einrichtung zum Umsetzen eines Videosignals, das aus duo-binär-codierten Signalanteilen und analogen Signalanteilen zusammengesetzt ist (z.B. D-MAC, D2-MAC oder HD-MAC), in einen Datenstrom und eine Einrichtung zum Rückumsetzen des Datenstroms.

Für die Verteilung von Fernsehsignalen wurde ein neuer europäischer Fernsehübertragungs-Standard geschaffen. Dieser Standard trägt die Abkürzung MAC für Multiplexed Analogue Components. Je nach Auflösung und Bandbreite des gewählten MAC-Signals wird zwischen HD-MAC, D-MAC und D2-MAC-Signalen unterschieden. Im folgenden wird, wenn es in dem jeweiligen Fall auf den Unterschied zwischen diesen Signalen nicht ankommt, ganz allgemein von MAC-Signalen gesprochen.

Die Zusammensetzung eines D2-MAC-Signals ist beispielsweise in dem Buch "Satellitenfernsehen mit D2-MAC/Paket" von Rudolph Vollmer, herausgegeben von der Blaupunkt-Werke GmbH, Hildesheim, 1986, insbesondere auf den Seiten 20 bis 44, beschrieben. Bei einem Fernsehbild ist zum einen das Bildsignal, das sich in bekannter Weise aus einem Luminanzsignal Y und zwei Chrominanzsignalen U, V zusammensetzt und ein (Mehrkanal)-Tonsignal zu übertragen. Beim MAC-Standard wird das Bildsignal im Zeitmultiplex übertragen, wobei die einzelnen Komponenten Y, U und V als analoge Signale vorliegen. Wie bei herkömmlichen Fernsehsystemen, zum Beispiel dem PAL-System, wird das Bildsignal zeilenweise übertragen. Beim MAC-System beginnt eine Zeile mit einem Zeilensynchronwort, gefolgt von einem Ton- und Datenteil, einem Chrominanzteil, in dem von Zeile zu Zeile wechselnd die U- bzw. V-Komponente übertragen wird, und dem Luminanzteil. Der Ton- und Datenteil ist duo-binär codiert, um gegenüber Störungen resistent zu sein und um die Bandbreite zu reduzieren. Die duo-binäre Codierung ist in dem eingangs erwähnten Buch, insbesondere auf den Seiten 26 bis 29, ausführlich beschrieben.

Für die terristische Verteilung der von Satelliten empfangenen MAC-Signale ist es vorgesehen, diese Verteilung über bestehende digitale Einrichtungen vorzunehmen. Bei digitalisierten MAC-Signalen liegt die Datenrate bei 162 Mbit/s. Ein in Europa verbreitetes digitales Übertragungssystem ist das nach CCITT, Recom. G 702 genannte übertragungssystem der vierten PCM-Hierarchiestufe mit 140 Mbit/s. Aus dem Aufsatz "Komponenten-Codec für 140 Mbit/s-Videosignale", Johann Bialetzki, Manfred Gendsior, Gregor Schmid, erschienen in PKI Technische Mitteilungen 1/1988, Herausgeber Philips Kommunikations Industrie AG, Seiten 45 bis 49 ist es beispielsweise bekannt, analoge Fernsehsignale, die eine Quellendatenrate von 216 Mbit/s aufweisen mittels einer Datenreduzierung durch eine HDPCM-Codierung in einen Datenstrom von 135 Mbit/s umzuwandeln und diesen Datenstrom über ein Übertragungssystem der vierten PCM-Hierarchiestufe zu übertragen.

Aufgabe der vorliegenden Erfindung ist es, eine Einrichtung zu schaffen, mit der eine Übertragung von Signalen der eingangs genannten Art über übliche digitale Übertragungsstrecken ermöglicht wird und die gegebenenfalls einen Schutz der übertragenen Daten gegen Übertragungsfehler bietet.

Diese Aufgabe wird dadurch gelöst, daß aus dem Videosi gnal gebildete Abtastwerte in einem Video-Umsetzer einem duo-binären Decoder und einem HDPCM-Coder zugeführt sind, das binäre Ausgangssignal des duo-binären Decoders und die HDPCM-Codeworte zu einem Video-Datenstrom zusammengefaßt werden und daß in einem Video-Rückumsetzer der Datenstrom mittels eines duo-binären Coders und eines HPDCM-Decoders wieder in ein Videosignal zurückgewandelt werden.

Um einen Qualitätsverlust beim rückumgesetzten Bildsignal zu vermeiden, muß das dem Coder zugeführte Signal mit mindestens acht Bit Auflösung digitalisiert werden. Bei einer der Bandbreite des abzutastenden Signals angepaßten Abtastfrequenz von 20,25 MHz ergibt sich hieraus ein Datenstrom mit 162 Mbit/s. Die Erfindung bietet den Vorteil, daß sie eine Übertragung dieses Datenstroms über eine Übertragungsstrecke mit niedrigerer Datenbitrate (z.B. 140 Mbit/s) ermöglicht, ohne daß sich eine hörbare oder sichtbare Verschlechterung des Fernsehsignals ergibt.

In einer weiteren Ausgestaltung der Erfindung ist die Zusammensetzung des PCM-Signals zeitlich gesteuert. Dies hat den Vorteil, daß hierdurch der interne Aufwand zur Steuerung des Coders bzw. Decoders verringert werden kann.

In einer konkreten Ausgestaltung der Erfindung weisen die HDPCM-Worte eine Datenwortbreite von sieben Bit auf. Nach jeweils acht übertragenen HDPCM-Worten wird jeweils anstelle des nächsten zu übertragenden HDPCM-Wortes eines Abtastwertes der Abtastwert selbst übertragen. Dies hat den Vorteil, daß hierdurch eventuell aufgetretene Übertragungsfehler schnell abgebaut werden können.

Die Erfindung wird nun anhand eines in der Zeichnung dargestellten Ausführungsbeispiels näher beschrieben und erläutert.

Es zeigen:

Fig. 1 ein Übertragungssystem mit Video-Umsetzer, Multiplexer, Demultiplexer und Video-Rückumsetzer zur übertragung des MAC-Signals über eine 140 Mbit/s übertragungsstrecke

Fig. 2 den Aufbau eines HD-MAC-Signalrahmens aus Videozeilen und sonstigen Signalzeilen.

Fig. 3 eine Videozeile eines HD-MAC-Signalrahmens.

Fig. 4 einen Coder zur Umsetzung eines MAC-Signals in einen Datenstrom.

Fig. 5 einen weiteren Coder zum Umsetzen eines MAC-Signals in einen Datenstrom, der einen raschen Abbau von Übertragungsfehlern ermöglicht.

Fig. 6 einen Ausschnitt aus dem Datenstrom, wie er zur Übertragung einer Videozeile genutzt wird.

Fig. 7 einen Decoder zur Rückumsetzung des Video-Datenstroms in ein MAC-Signal

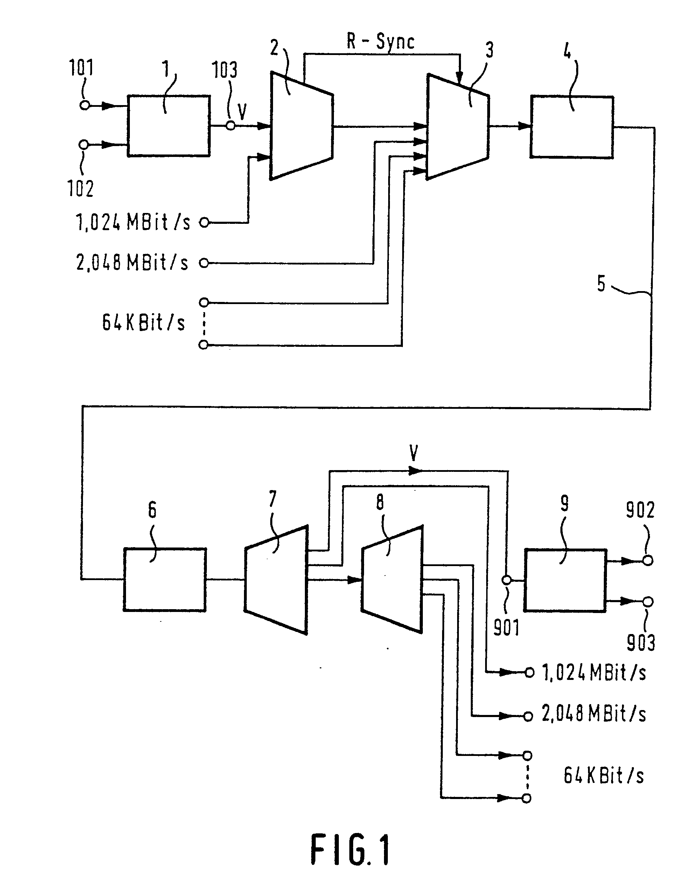

Fig. 1 zeigt in schematischer Darstellung ein Übertragungssystem zum Übertragen von MAC-Signalen über eine digitale Übertragungsstrecke 4, 5, 6. An einer Eingangsklemme 101 bzw. 102 werden MAC-Signale einem Video-Umsetzer 1 zugeführt, in welchem eine im folgenden noch im einzelnen beschriebene Umsetzung des MAC-Signals in einen acht-bit-weise strukturierten Datenstrom mit einer Datenbitrate kleiner als 140 Mbits/s erfolgt. Dieser, im Video-Umsetzer 1 erzeugte Datenstrom, wird im folgenden als Video-Datenstrom bezeichnet. In einem ersten und einem zweiten Multiplexer 2, 3 wird der Video-Datenstrom eventuell zusammen mit anderen niederratigen Zusatzsignalen in einen PCM-Rahmen eingefügt. Die im PCM-Rahmen eingefügten Daten werden mittels eines herkömmlichen PCM-Senders 4 der vierten Hierarchiestufe über eine entsprechende digitale Übertragungsstrecke 5 zu einem PCM-Empfänger 6 übertragen.

Das über den PCM-Sender 4, die Übertragungsstrecke 5 und den PCM-Empfänger 6 übertragene Signal, das im wesentlichen den Video-Datenstrom in später noch im einzelnen erläuterter Form enthält, ist im eigentlichen Sinne kein PCM-Signal, da die übertragenen Datenworte nicht pulscodemoduliert sind. Da es für den PCM-Sender 4, die Übertragungsstrecke 5 und den PCM-Empfänger 6 ohne Bedeutung ist, welche Daten nun tatsächlich übertragen werden, solange ein PCM-Signalrahmenaufbau, welcher auf einer Datenwortbreite von acht Bit basiert, eingehalten wird, wird im folgenden dieses Signale zur Unterscheidung von anderen Signalen dennoch als PCM-Signal bezeichnet.

Das im PCM-Empfänger 6 empfangene PCM-Signal wird in einem ersten und einem zweiten Demultiplexer 7, 8 wieder in den Video-Datenstrom und die zugesetzten Zusatzsignale zerlegt. In einem Video-Rückumsetzer 9 wird der Video-Datenstrom in ein MAC-Signal rückumgesetzt.

Im folgenden Ausführungsbeispiel wird stellvertretend für die verschiedenen MAC-Signale die Umsetzung eines HD-MAC-Signals in einen, zur Übertragung über ein digitales Übertragungssystem der vierten PCM-Hierarchiestufe geeigneten Video-Datenstrom, beschrieben.

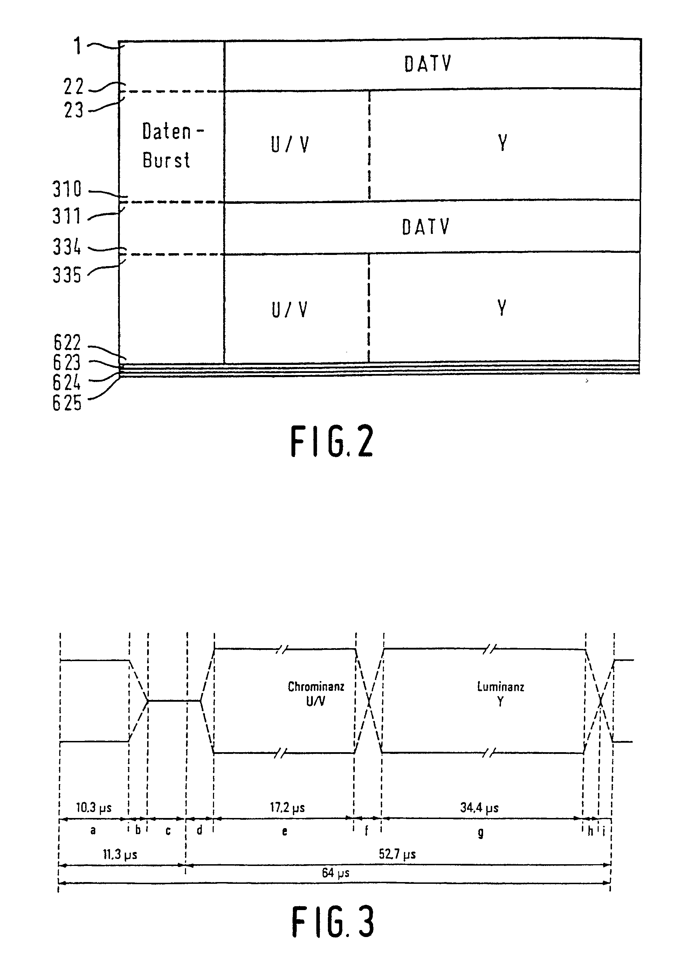

Fig. 2 zeigt in schematischer Darstellung den Aufbau eines HD-MAC-Rahmens zur Übertragung eines aus einzelnen Bildpunkten aufgebauten Fernsehbildes. Der HD-MAC-Rahmen besteht aus 625 Zeilen, welche als HD-MAC-Signal hintereinander zusammengefügt werden. Je nach Zeilennummer werden innerhalb einer Zeile verschiedene Informationen übertragen. Eine Zeile ist jeweils 64 $\mu$s lang und wird durch ein Taktsignal von 20,25 MHz in 1 296 Taktperioden unterteilt. Dieses Taktsignal bzw. die doppelte Frequenz dieses Taktsignals eignet sich besonders vorteilhaft bei der Digitalisierung eines MAC-Signals als Abtastfrequenz. Im folgenden wird im einzelnen der Aufbau der unterschiedlichen Zeilen anhand eines D2-MAC-Signals bzw. eines auf D2-MAC aufbauenden HD-MAC-Signals beschrieben. Bei D-MAC bzw. einem auf D-MAC aufbauenden HD-MAC-Signal ist der Signalaufbau prinzipiell ähnlich, nur daß die Datenrate und die zeitliche Zusammensetzung der Zeilen sich von (HD)D2-MAC-Signalen unterscheidet.

Die Mehrzahl der Zeilen eines MAC-Rahmens wird für die Übertragung einer Bildzeile genutzt. Bildzeilen sind die Zeilen 23 bis 310 und 335 bis 622. In Fig. 3 ist der Aufbau einer Bildzeile dargestellt. In den ersten 209 Taktperioden a einer Bildzeile wird ein aus 105 Bit bestehender Datenburst übertragen. Dieser Datenburst enthält duo-binär codierte Daten, meist digitalisierten Ton. Auf diesen Datenburst folgen 4 Taktperioden b zum übergang von diesem digitalen Datenburst auf eine 15 Taktperioden lange Klemmphase c und ein 10 Taktperioden langer Übergang d von dieser Klemmphase auf ein Chrominanzsignal U/V. Das Chrominanzsignal U/V, in dem jeweils eines der beiden Chrominanzsignale U oder V zeilenweise abwechselnd übertragen wird, ist 349 Taktperioden e lang. Nach einem Übergang f von 5 Taktperioden zwischen Chrominanzsignal auf ein Luminanzsignal folgt das 697 Taktperio den g lange Luminanzsignal Y. Anschließend folgen wieder 7 Taktperioden als Übergang h, i vom Luminanzsignal zum digitalen Datenburst der nächsten Zeile.

Bei MAC-Signalen entsprechen die Zeilen 2 bis 22 und 311 bis 334 der vertikalen Austastlücke eines herkömmlichen Fernsehsignals, zum Beispiel der PAL-Norm. Diese Zeilen können bei D-MAC bzw. D2-MAC zum Übertragen von Videotextdaten, zum Beispiel UK-Teletext, oder Antiope genutzt werden. Diese Videotextdaten sind genau wie die digitalen Tondaten duo-binär codiert. Bei HD-MAC werden diese Zeilen anstelle der Videotextdaten zur Übertragung der für ein HD-MAC-Bild zusätzlichen Informationen genutzt.

Ein HDTV-Bild (High Definition Television) besteht aus 1 250 Zeilen. Zur Übertragung eines HDTV-Bildes ist daher ein Vielfaches der Bandbreite eines üblichen Bildes, z.B. der PAL-Norm, erforderlich. Um ein HDTV-Bild in einem MAC-Rahmen zu übertragen wird das HDTV-Bild mittels eines hier nicht weiter beschriebenen Datenreduktionsverfahrens zu einem MAC-Bild reduziert und in einem zusätzlichen DATV-Signal (Digital Assisted TV) Informationen über die Datenreduktion zusammengefaßt, die eine Rückumwandlung des MAC-Bildes in ein HDTV-Bild ermöglichen. Zur Übertragung des DATV-Signals werden die für die Videotextdaten vorgesehenen Zeilen verwendet. Das in den Videodatenzeilen 2 bis 22 und 311 bis 334 übertragene DATV-Signal ist dann entsprechend auch duo-binär codiert.

Anstelle des Chrominanz- bzw. Luminanzsignals wird in Zeile 1 und in Zeile 623 ein Testsignal übertragen. Den gleichen Aufbau zeigt auch die Zeile 624, in der anstelle des Testsignals ein Referenzsignal übertragen wird. Die letzte Zeile 625 enthält Daten zur Rahmensynchronisation und für Service-Identifikationen. Diese Zeile besteht in ihrer ganzen Länge aus duo-binär codierten Daten.

Somit besteht eine MAC-Signal Norm sowohl aus Zeilen mit einem duo-binär codierten Signalanteil und einem analogen Signalanteil als auch aus Zeilen, die ausschließlich aus duo-binär codierten Signalen bestehen.

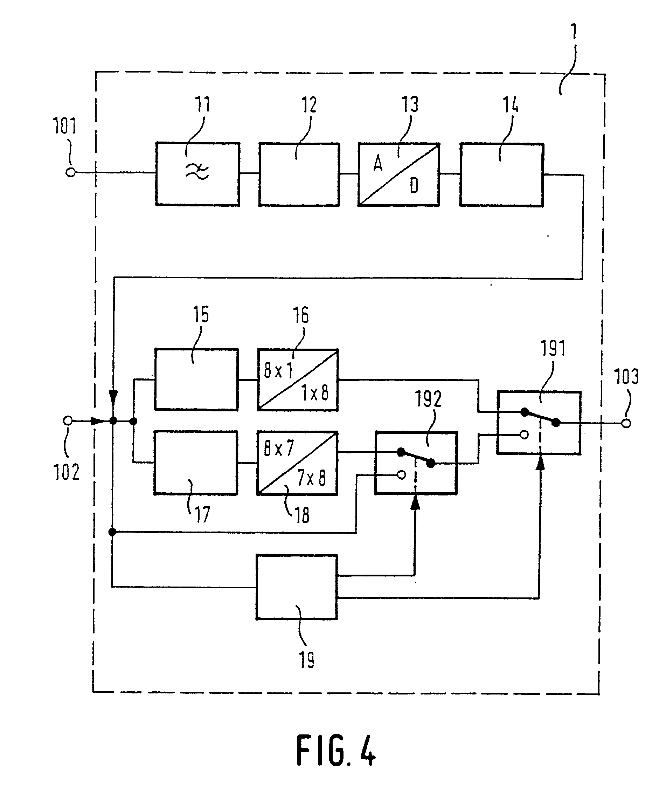

Fig. 4 zeigt einen Video-Umsetzer 1 zur Umsetzung des MAC-Signals in einen Video-Datenstrom. Der Video-Umsetzer 1 weist einen ersten Eingang 101 für analoge MAC-Signale und einen zweiten Eingang 102 für ein bereits digitalisiertes MAC-Signal auf. Ein analoges MAC-Signal, das in den ersten Eingang 101 eingespeist wird, durchläuft zunächst einen Eingangstiefpaß 11, einen Klemmverstärker 12, einen Analog-Digital-Umsetzer 13 und ein digitales Filter 14. Im Ausführungsbeispiel wird zur Vermeidung von Alias-Störungen das Eingangssignal mit der doppelten Frequenz der gewählten Abtastfrequenz 20,25 MHz überabgetastet, gefiltert und anschließend unterabgetastet. Der Analog-Digital-Umsetzer 13 liefert Datenworte der Wortbreite acht Bit. Demzufolge ergibt sich bei der gewählten Abtastfrequenz von 20,25 MHz ein Datenstrom von 162 Mbit/s.

Diese Abtastwerte bzw. wahlweise an dem zweiten Eingang 102 zuführbare bereits digitalisierte MAC-Signale werden nun sowohl einem duo-binären Decoder 15 als auch einem HDPCM-Coder 17 zugeführt. Bei der gewählten Abtastrate von 20,25 MHz entspricht jeder Abtastwert genau einem Bitintervall der duo-binär codierten Daten. Aus den acht Bit breiten Abtastwerten rekonstruiert der duo-binäre Decoder 15 das ursprünglich diesem Signal zugrundeliegende Datenbit. Jeweils acht aufeinanderfolgende decodierte Datenbits werden in einem Bit/Oktett-Umsetzer 16 zu einem Datenwort (duo-binäres Oktett) zusammengefaßt und an einen ersten Eingang eines symbolisch in der Figur als Umschalter dargestellten Auswahlschalters 191 zugeführt.

Im HDPCM-Coder 17 wird aus jedem acht Bit breiten Abtastwert ein sieben Bit breites HDPCM-Wort gebildet. Die Hybrid-DPCM-Codierung (HDPCM-Codierung) ist ein Codierungsverfahren, das auf dem Prinzip der Differenz-Puls-Code-Modulation (DPCM) beruht. In einem Coder wird eine Differenz zwischen einem, dem HDPCM-Coder zugeführten Codewort, im Ausführungsbeispiel ist dieses Codewort der jeweilige Abtastwert, und einem Prädiktionswert quantisiert und codiert, um ein Differenzcodewort kleinerer Bitbreite als der Bitbreite des zugeführten Codeworts zu erhalten. Im Unterschied zur üblichen DPCM-Codierung wird bei der HDPCM-Codierung noch der quantisierte, codierte Prädiktionswert (Prädiktionscodewort) aufaddiert. Die Summe des Differenzcodewortes und des Prädiktionscodewortes ergibt ein HDPCM-Codewort, welches eine geringere Wortbreite aufweist als das dem HDPCM-Codierer zugeführte zu codierende Codewort. Die Einbeziehung von zusätzlicher Amplitudeninformation des Prädiktionswertes ergibt gegenüber der DPCM-Codierung eine geringere Empfindlichkeit gegen Übertragungsfehler. Bei einem entsprechenden Decoder wird auf diese Weise ein schrittweiser Fehlerabbau im Decoder erzwungen. Die HDPCM-Codierung ist in dem eingangs erwähnten Aufsatz näher beschrieben bzw. dort sind entsprechende weiterführende Literaturstellen angegeben.

Für den gewählten Aufbau des Video-Umsetzers 1 ist es besonders vorteilhaft nur Prädiktionswerte aus der gleichen Zeile zu verwenden. Eine solche zeilenorientierte Codierung ermöglicht einen einfachen Aufbau des Video-Umsetzers 1, da Pufferspeicher, die mehrere Zeilen oder das ganze Bild speichern müßten, entfallen können. Im Ausführungsbeispiel wir als Prädiktionswert der jeweils vorhergehende rekonstruierte Abtastwert verwendet.

Jeweils acht sieben Bit breite HDPCM-Worte (Septetts) werden in einem Septett/Oktett-Umsetzer 18 zu sieben acht-Bit-breiten Datenworten (HDPCM-Oktetts) zusammengefaßt. Auf diese Weise besteht ein erstes aus dem Septett/Oktett-Umsetzer 18 geliefertes Datenwort aus sieben Bit eines ersten HDPCM-Wortes und dem ersten Bit eines zweiten HDPCM-Wortes, ein zweites vom Septett/Oktett-Umsetzer 18 geliefertes Datenwort aus den letzten sechs Bit des zweiten HDPCM-Wortes und den ersten beiden Bits eines dritten HDPCM-Wortes und sofort. Die vom Septett/Oktett-Umsetzer 18 gelieferten Datenworte werden an den zweiten Eingang des Auswahlschalters 191 geführt. Eine Steuerschaltung 19, welcher die Abtastwerte des MAC-Signals zugeführt sind und die daraus Synchronisationssignale zur Erkennung des Bildanfangs und der Zeilenanfänge der MAC-Signale zurückgewinnt, steuert den Auswahlschalter 191 so, daß am Ausgang 103 des Video-Umsetzers 1 immer dann duo-binäre Oktetts erscheinen, wenn nach der MAC-Norm duo-binäre Signalanteile übertragen werden und daß in allen anderen Fällen, wenn nicht duo-binär codierte Signalanteile vorhanden sind, die HDPCM-Oktetts an den Ausgang 103 gelegt werden.

In einer weiteren vorteilhaften Ausgestaltung der Erfindung ist die Steuerschaltung 19 so aufgebaut, daß sie unabhängig von den einer Zeile zugrundeliegenden ursprünglichen Daten in den ersten 10,27 μsec immer den Ausgang des Bit/Oktett-Umsetzers 16 durchschaltet. Dies hat den Vorteil, daß der Aufwand für die Steuerschaltung 19 erheblich reduziert werden kann und für die Steuerschaltung beispielsweise lediglich ein nicht dargestellter erster Zähler vorgesehen werden muß, der jeweils mit dem Beginn einer Zeile gestartet wird und nach jeweils 208 Taktintervallen der Abtastfrequenz 20,25 MHz einen Impuls abgibt und mit diesem Impuls den Auswahlschalter 191 ansteuert. Zu Beginn jeder neuen Zeile wird der Auswahl schalter 191 durch einen weiteren Impuls wieder zurückgestellt. Hierdurch werden zwar duo-binäre Abtastwerte, die eine ganze Zeile einnehmen, teilweise ebenfalls siebenbit-HDPCM-codiert, aber außer einer äußerst geringfügigen Erhöhung der Übertragungsrate bringt dies keine weiteren Nachteile mit sich.

Mit dieser Ausführungsform wird jede MAC-Zeile mit 7 824 Bit (208 * 1 Bit + 1 088 * 7 Bit) codiert, was einer Nettodatenrate von 122,25 MBit/s entspricht.

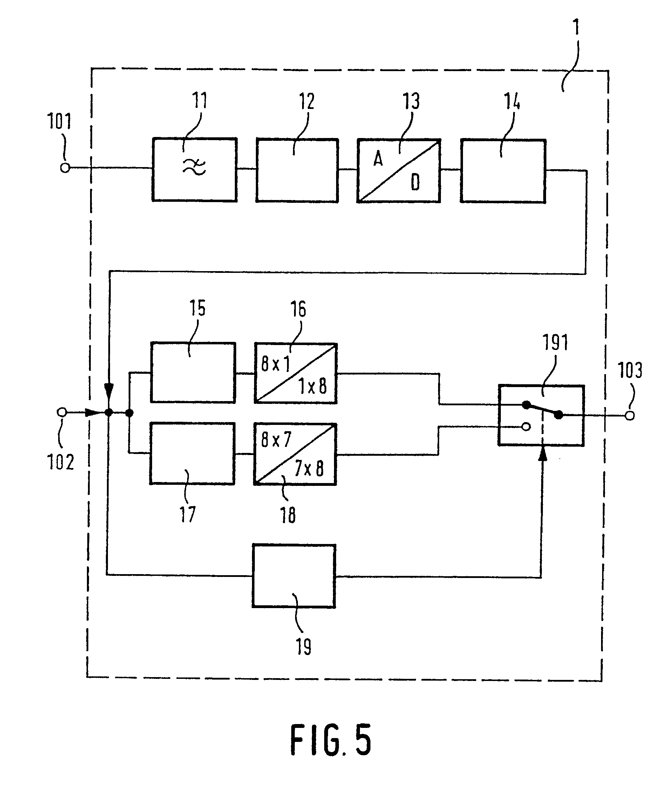

In einer weiteren, in der Fig. 5 dargestellten, Ausführungsform der Erfindung ist eine zusätzliche Redundanz für einen schnellen Fehlerabbau bei der auf der empfangsseitig vorzunehmenden HDPCM-Decodierung vorgesehen. Bei den zu übertragenden HDPCM-Worten wird nach jeweils acht HDPCM-Worten, d.h. nach jeweils sieben HDPCM-Oktetts, nicht das HDPCM-Wort des gerade zu übertragenden Abtastwertes sondern der Abtastwert selbst als acht Bit breites Datenwort übertragen. Hierzu ist in der Steuerschaltung 19 ein nicht dargestellter zweiter Zähler angeordnet, welcher ebenfalls mit der Abtastfrequenz getaktet ist und jeweils mit dem Impuls des ersten Zählers, der den Auswahlschalter 191 von dem duo-binären Datenzweig 15, 16 auf den HDPCM-Datenzweig 17, 18 umschaltet, rückgesetzt wird. Dieser Zähler zählt modulo neun. Ein zweiter Umschalter 192 ist zwischen dem Septett/Oktett-Umsetzer 18 und dem entsprechenden Eingang des Auswahlschalters 191 angeordnet. An einem zweiten Eingang des zweiten Umschalters 192 sind die Abtastwerte zugeführt. Jeweils beim Zählerstand neun erzeugt der zweite Zähler einen Ausgangsimpuls, der den zweiten Umschalter 192 ansteuert. Auf diese Weise werden bei den Zählerständen eins bis acht dem ersten Auswahlschalter 191 acht HDPCM-Oktetts zugeführt und bei einem Zählerstand neun der jeweils gerade aktuelle Abtastwert dem Auswahlschalter 191 zugeführt. Durch diese Maßnahme erhöht sich die Daten übertragungsrate des auf diese Weise gebildeten Datensignals auf 124,125 Mbit/s. Die Übertragung eines Abtastwertes anstelle eines HDPCM-Wertes bietet aber den Vorteil, daß ein Übertragungsfehler, der bei ausschließlicher HDPCM-Codierung in Bereichen konstanter Helligkeit des Videobildes bei der HDPCM-Decodierung zu einem bleibenden Restfehler führen würde, spätestens bei jedem neunten Bildpunkt eliminiert wird.

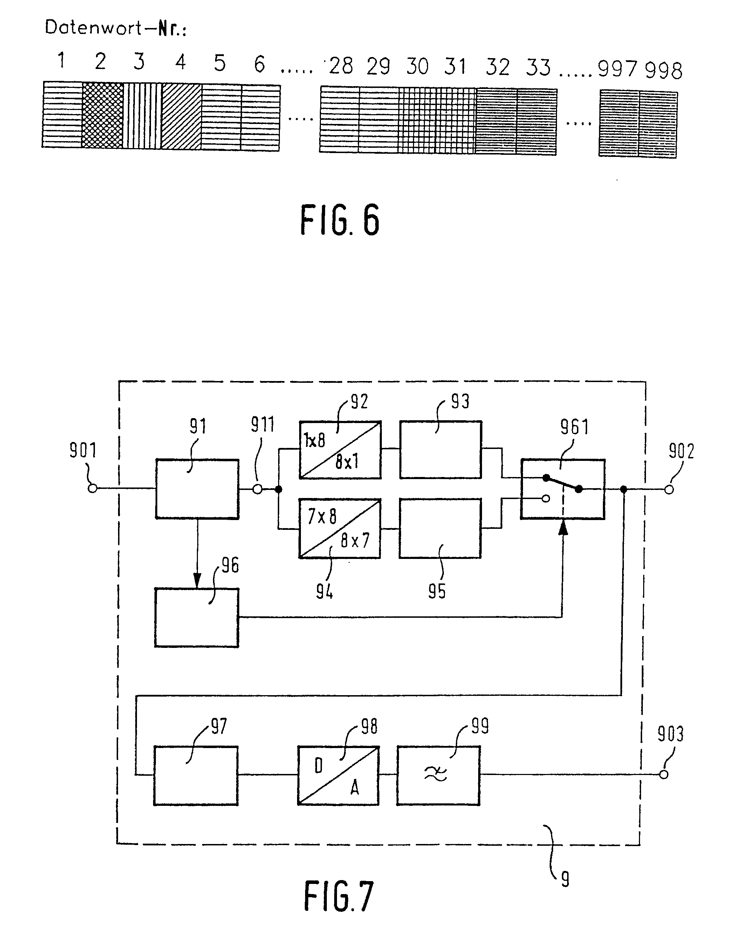

Neben den in Datenworte umgewandelten duo-binären Daten bzw. HDPCM-Daten ist es vorteilhaft, noch weitere Daten zu übertragen, um die Rückumsetzung der Datenworte zu erleichtern. Fig. 7 zeigt einen aus 998 acht Bit breiten Datenworten bestehenden Datenstrom für eine vorteilhafte Übertragung einer codierten MAC-Zeile. Im Datenwort 1 wird das erste duo-binäre Oktett aus den ersten acht decodierten duo-binären Daten übertragen. Da bei der Rückumsetzung daraus acht duo-binäre Bits bzw. duo-binär codierte Signale gebildet werden, für deren Aussendung acht Taktperioden benötigt werden, können nun ohne Aufwand für größere Pufferung bis zu sieben Oktetts mit Hilfsinformationen innerhalb des Datenstroms übertragen werden, bis das nächste duo-binäre Oktett decodiert werden muß. Das Datenwort 2 ist ein Initialisierungsbyte. Im Datenwort 3 wird ein PCM-Wert eines in Zeile 624 enthaltenen Weißwertes übertragen. Mittels dieses Weißwertes werden die Pegel der analogen Signale bei der Rückumsetzung untereinander abgeglichen. Datenwort 4 ist ein Datenwort zur Signalisierung des Abtastrasters. Die Datenwörter 5 bis 29 enthalten das zweite bis sechsundzwanzigste duo-binäre Oktett. Datenwort 30 und 31 dienen für die Synchronisation des Empfängers. In den darauffolgenden Bytes 32 bis 998 werden die 967 HDPCM-Oktetts einschließlich der für die Redundanz direkt eingefügten Abtastwerte übertragen.

In einer weiteren Ausführungsform wurden noch zusätzlich weitere Datenworte an die Datenworte einer Video-Zeile angehängt. Diese zusätzlichen Datenwörter könnten beispielsweise für die Implementierung eines weiteren Fehlerschutzes genutzt werden.

Bei dieser zuletzt gewählten Ausführungsform beträgt die Brutto-Datenrate incl. Fehlerschutz und der zusätzlichen Hilfsinformation 135,00 MBit/s. Zur flexiblen Nutzung der 140 Mbit/s-Übertragungsstecke der vierten Hierarchiestufe kann daher wahlweise dieser Video-Datenstrom zusätzlich noch mit einem plesiochronen Datenstrom von 2,048 Mbit/s, einem synchronen Datenstrom der Datenrate 1,024 Mbit/s und mehreren synchronen 64 Kbit/s-Datenkanälen zu einem Gesamtdatenstrom von 139,264 Mbit/s gebündelt werden. Ein solcher gebündelter Datenstrom kann über die bestehenden Leitungseinrichtungen der vierten Hierarchiestufe übertragen werden. In Fig. 1 sind die hierzu erforderlichen Multiplexer 2, 3 und Demultiplexer 7, 8. Der erste Multiplexer 2 baut den Rahmen mit einer Synchronisierinformation R-Sync auf. Im ersten Multiplexer 2 werden auch der Video-Datenstrom und die synchrone 1,024 Mbit/s-Dateninformation eingefügt. Die Zeitschlitze für die übrigen Datenkanäle sind bereits vorhanden aber noch nicht belegt. Der zweite Multiplexer 4 fügt einen plesiochronen 2,048 Mbit/s-Datenkanal und bis zu sechs synchrone 64 Kbit/s-Datenkanäle ein. Die Information über den Rahmenanfang wird vom ersten Multiplexer 2 übernommen.

Auf der Empfangsseite wandelt ein erster Demultiplexer 7 das vom PCM-Empfänger 6 empfangene Datensignal in ein NRZ-Binärsignal um. Anschließend wird die Synchronisation auf die Rahmenerkennung durchgeführt. Nach der Seriell-Parallel-Wandlung erfolgt die Rahmenzerlegung. Der erste Demultiplexer 7 trennt den Video-Datenstrom und den 1,024 Mbit/s-Datenkanal ab. Ein zweiter Demultiplexer 8 übernimmt die anderen Datenkanäle mit 2,048 Mbit/s und die 64 Kbit/s-Datenkanäle.

In Fig. 7 ist ein entsprechend dem in Fig. 4 dargestellten Ausführungsbeispiel eines ersten Video-Umsetzers komplementärer Video-Rückumsetzer 9 zum Rückumsetzen des vom ersten Demultiplexer 7 gelieferten Video-Datenstroms in ein digitales bzw. analoges MAC-Signal dargestellt. Der Video-Datenstrom wird über eine Eingangsklemme 901 einem Vor-Demultiplexer 91 zugeführt. Dieser Vor-Demultiplexer 91 entfernt die für die Initialisierung, Synchronisierung, Weißwertabgleich ect. vorgesehenen Bytes, so daß an seinem Videodatenausgang 911 nur noch die duo-binären Oktetts, die HDPCM-Oktetts, enthalten sind. Dieser Datenstrom ist zum einen einem Oktett/Bit-Umsetzer 92 und einem Oktett/Septett-Umsetzer 94 zugeführt. Dem Oktett/Bit-Umsetzer 92 ist ein duo-binärer Coder 93 angeschlossen, dessen Ausgang an einen dritten Umschalter 961 geführt ist. Die sieben Bitworte des vom Oktett/Septett-Umsetzer 94 gelieferten Datenworte werden in einem HDPCM-Decoder 95 zu den ursprünglichen acht Bit Abtastwerten zurückgewandelt und an einen zweiten Eingang des dritten Umschalters 961 geführt. Eine Synchronisationsschaltung 96, der die vom Datenstrom abgezweigten Synchronisationssignale und anderen Signale des Vor-Demultiplexers 91 zugeführt sind, erzeugt ein Umschaltsignal für den dritten Umschalter 961. Durch entsprechendes Umschalten des dritten Umschalters 961 entsprechend der Umschaltung des Auswahlschalters 261 auf der Sendeseite erhält man auf diese Weise am Ausgang des dritten Umschalters 961 ein zurückgewonnenes digitales MAC-Signal an einer Ausgangsklemme 902. Um aus dem digitalen MAC-Signal ein analoges MAC-Signal zu gewinnen, wird das digitale MAC-Signal einem digitalen Filter 97, einem Digital-Ana log-Wandler 98 und einem Tiefpaßfilter 99 hintereinander zugeführt. Am Ausgang 903 des Tiefpaßfilters 99 kann dann ein analoges MAC-Signal abgegriffen werden.

In einfacher Weise kann der Video-Datenstrom auch an MAC-Signale mit einer höheren Auflösung als acht Bit pro Abtastwert angepaßt werden. Hierzu ist lediglich eine der gewählten Auflösung entsprechender HDPCM-Codierer zu wählen, der beispielsweise aus neun-Bit-breiten Abtastwerten wiederrum sieben-Bit-breite Ausgangscodewörter erzeugt.

## Ansprüche

1. Einrichtung zum Umsetzen eines Videosignals, das aus duo-binär codierten Signalanteilen und analogen Signalanteilen zusammengesetzt ist (z.B. D-MAC, D2-MAC oder HD-MAC), in einen Datenstrom und eine Einrichtung zum Rückumsetzen des Datenstroms,
dadurch gekennzeichnet,
daß aus dem Videosignal gebildete Abtastwerte in einem Video-Umsetzer (1), einem duo-binären Decoder (15) und einem HDPCM-Coder (17) zugeführt sind, das binäre Ausgangssignal des duo-binären Decoders und die HDPCM-Codeworte zu einem Video-Datenstrom (V) zusammengefaßt werden und daß in einem Video-Rückumsetzer (2) der Datenstrom mittels eines duo-binären Coders (93) und eines HPDCM-Decoders (95) wieder in ein Videosignal zurückgewandelt werden.

2. Einrichtung nach Anspruch 1,
dadurch gekennzeichnet,
daß die Zusammensetzung des Video-Datenstroms zeitlich gesteuert wird.

3. Einrichtung nach Anspruch 1 oder 2,
dadurch gekennzeichnet,
daß die HDPCM-Wörter eine Datenwortbreite von 7 Bit (Septette) aufweisen.

4. Einrichtung nach einem der Ansprüche 1, 2 oder 3,
dadurch gekennzeichnet,
daß nach jeweils n HDPCM-Worten anstelle des nächsten zu übertragenden HDPCM-Wortes eines Abtastwertes der Abtastwert selbst übertragen wird.

5. Einrichtung nach Anspruch 4,
dadurch gekennzeichnet,
daß für n die Zahl 8 gewählt ist.

6. Einrichtung nach einem der Ansprüche 3, 4 oder 5,
dadurch gekennzeichnet,
daß der Video-Datenstrom aus Datenwörtern der Wortlänge acht Bit (Oktette) zusammengesetzt ist, wobei jeweils acht einzelne aufeinanderfolgende Bits des duo-binären Decoders zu einem Oktett (duo-binäres Oktett) und jeweils acht Septette des HDPCM-Coders zu sieben Oktetten (HDPCM-Oktette) zusammengefaßt werden.

7. Einrichtung nach Anspruch 6,
dadurch gekennzeichnet,
daß der Video-Datenstrom zur Übertragung einer Videozeile aufgebaut ist, aus einem ersten duo-binären Oktett, gefolgt von drei Oktetten, die verschiedene Hilfsinformationen beinhalten, gefolgt von fünfundzwanzig weiteren fortlaufenden duo-binären Oktetten, zwei weiteren Oktetten für Synchronisationsinformationen und 967 HDPCM-Oktetten einschließlich der direkt zu übertragenden Abtastwerte.

8. Einrichtung nach Anspruch 7,
dadurch gekennzeichnet,
daß den 998 Oktetten des Video-Datenstroms zur Übertragung einer Videozeile noch weitere acht-Bit-Worte (Bytes) angehängt sind.

9. Einrichtung nach Anspruch 8,
dadurch gekennzeichnet,
daß die dem Video-Datenstrom zur Übertragung einer Zeile angehängten Bytes für einen Fehlerschutz verwendet werden.

10. Einrichtung nach einem der Ansprüche 1, 2, 6, 7, 8 oder 9,
dadurch gekennzeichnet,
daß der Video-Datenstrom mittels sendeseitigem Multiplexer (2, 3) und empfangsseitigem Demultiplexer (7, 8) über ein PCM-Übertragungssystem (4, 5, 6) der vierten Hierarchiestufe nach CCITT übertragen wird.

FIG.1

**FIG.2**

**FIG.3**

FIG. 4

FIG. 5

Datenwort—Nr.:

1  2  3  4  5  6 ..... 28 29 30 31 32 33 ..... 997 998

## FIG. 6

## FIG. 7